# EUROPEAN PATENT APPLICATION

(11) **EP 0 913 230 A2**
(43) Date of publication of application: **06.05.1999**
(21) Application number: 97911246.3
(22) Date of filing: 13.11.1997
(51) Int. Cl.: B23Q 39/02, B25H 1/10, B27C 9/04

(54) **CARPENTRY TABLE**

(30) Priority: 22.11.1996 ES 9602986 U
(71) Applicant: Otegui Lopez del Corral, Ivan, 01400 Llodio (ES); Otegui Lopez Del Corral, Ruth, E-01400 Llodi (ES)
(72) Inventor: Otegui Lopez del Corral, Ivan, 01400 Llodio (ES); Otegui Lopez Del Corral, Ruth, E-01400 Llodi (ES)
(74) Representative: Perez Bonal, Bernardo
(86) International application number: ES9700273
(87) International publication number: WO9822257

(57) **Abstract**

The carpentry table comprises a drum (3) situated inside the table which consists of a polygonal structure on the faces of which are mounted a plurality of electric machines (4) used for cutting, sanding or other operations effected on the wood part. The drum has a rotary shaft (5) bearing and rotating with respect to the frame (10) of the table, and is also provided with an opening (11) arranged at the working surface (1) and through which can emerge one of the machines (4). The table has braking means to stabilize the operational position of the machines.

## Description

### OBJECT OF THE INVENTION

The present invention consists of a carpentry work table which is outstanding, mainly because it includes a plurality of integrated machines for cutting, sanding and other operations, mounted on a rotary internal drum which is provided with one of the same placed in operative arrangement upwards, emerging from the work surface of the table, and the others housed in the other faces of the drum, available for use after the rotation of the drum towards its top working position.

Another object of the invention is that the table includes braking means for fixing the position of the drum in the operational position of the machine which emerges through the working surface.

### BACKGROUND OF THE INVENTION

"Do-it-yourself" works are widely spread operations in current society and there is an ever increasing number of users in existence who buy furniture in independent parts for their subsequent treatment and assembly.

The manual type of tools which are generally employed in the cutting, sanding, planing, etc., operations, are housed in a tool box in which are likewise included, the fastening elements, hardware and others, however, the electrically activated tools generally presenting a considerable volume are to be found located in various places in the different work tables.

The work tables are generally an essential element when conducting the previously indicated operations, since it is of great help especially in the establishment of the attachment of the wood part to be worked on; said tables, however, in the case of including any type of machinery for treatment of wood, generally consist of one single electric machine with the subsequent operative limitations which this implies.

Normally, the wood parts require to be treated by diverse machines in accordance with cutting, sanding, planing, etc., operational sequence, said machines being independently arranged and/or on various tables, which implies a waste of time during the transfer of the parts or machinery between the different operations.

The development of a table employed for carpentry operations which includes various integrated electric activation machines which may be used consecutively, saves time and increases comfortability during the operation, making the invention described herewith, feasible.

### DESCRIPTION OF THE INVENTION

The carpentry work table which is the object of this invention is outstanding, mainly because it includes on the actual work table, a plurality of machines for cutting, sanding, planing and other operations, mounted on a rotary drum which, by means of its rotation, places the machine which is used for treating the part, emerging on the upper work surface of the table.

The table is provided with a brake, placed in bottom position, on one of the side faces of the table which establishes the attachment of the drum in the position corresponding to the operative position of one of the machines emerging from the work surface.

This brake is equipped with a couplable screw on one of the bushings placed on the vertexes of the drum which assures the immobility of the drum on the top position of one of the machines.

The drum is accessible by means of a lid which covers the upper opening of the work surface of the machine, in such a manner, that the manual rotation of the same can be conducted, with access through said opening, or else, there is the possibility of activating it from the outside by other activating means, mechanical or electric.

Each one of the machines is mounted on the frame of the drum by means of a pair of screws, in consequence, facilitating its interchangeability so as to replace it by another machine of the same or another class.

The drum shall present its exterior edge in polygonal shape, preferably squared, in such a manner, that each one of the sides of the drum which has access with its machine to the work surface, is placed in coplanar position with the rest of the work surface.

The drum shall be supported by means of its rotary shaft which shall bear on the internal structure of the table.

Each one of the machines is connected to the drawer, having in any case, a connector which determines that the current passes only towards the machine which is found emerging from the work surface. There is the possibility that not all the machines are electrically activated and that they are activated by pedals.

The table includes for the electrically activated machines, a plurality of additional safety means which consist, among others, of the switching off of the current associated to an eventual disarrangement of the drum brake.

The table is likewise provided with safety means which cause the cutting of the current when one of the tools is jammed, when the brake uncouples in order to free the drum, as well as in the case of the opening of the doors of the table.

The table may include an integrated aspirator with its nozzle emerging through one of its side walls with the object of collecting the shavings or other type of rests of the machine during operation.

On the other hand, the table is provided with the possibility of adapting on the same, additional elements such as lamps, holes, screws and emery stones, as well as with an adjustable stop in position, to facilitate the supporting operations during cutting, sanding, etc.

Additionally, the table may include an internal space divided into compartments adjacent to the housing in which the drum rotates, which is arranged for the inclusion of tools, hardware and the like, with access from the exterior through side flap doors in which tools may be likewise placed.

In another embodiment, there is a possibility that the table only includes the drum with its corresponding machinery without a drawer or any additional compartment and which might have another foldable adjacent board.

### DESCRIPTION OF THE DRAWINGS

In order to complement the description which is being made, and with the object of helping to a better understanding of the characteristics of the invention, the present Specification is enclosed, forming integral part of the same, with a set of drawings in which, with illustrative and non limitative character, the following has been represented:

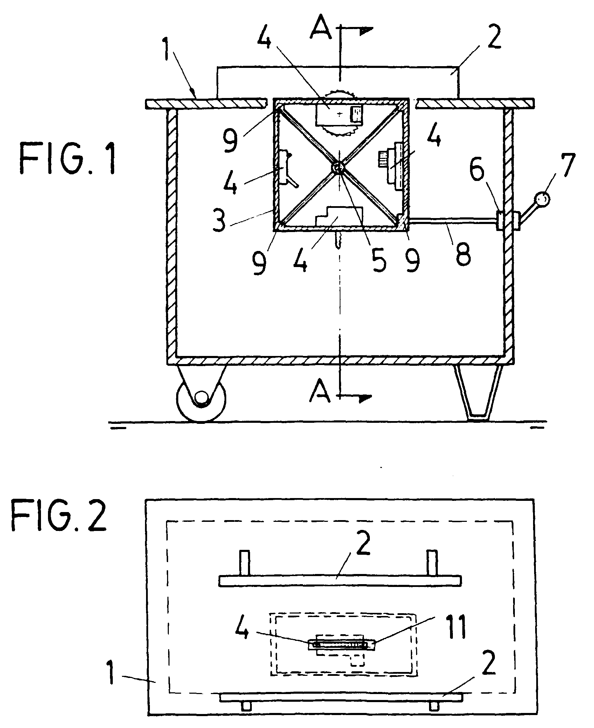

Figure 1 shows a cross sectional side view of the carpentry work table with the drum immobilized by the brake, with one of the machines emerging from the working surface of the table.
Figure 2 shows a plan view of the carpentry work table in which one of the machines is observed with one of the sides of the structure in top position emerging from the working surface of the table.

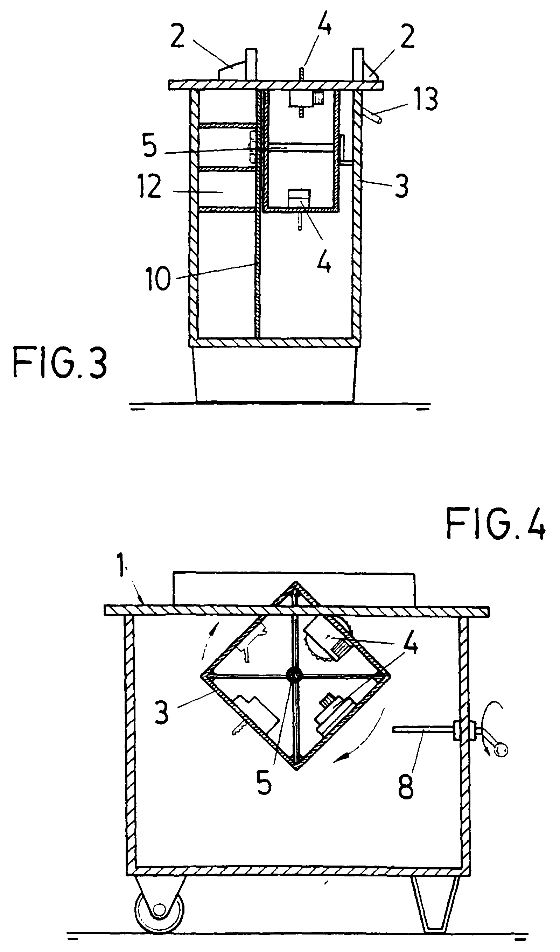

Figure 3 shows a section A-A' of figure 1 of the carpentry work table in which the drum and the tools compartment can be observed.
Figure 4 shows a cross sectional front view of the carpentry work table with the drum rotating.

### PREFERRED EMBODIMENT OF THE INVENTION

In view of the figures, a preferred embodiment is described, of the carpentry work table, which is provided with its horizontal work surface (1) and with an adjustable stop (2) at a distance which facilitates the operations to be conducted on the surface to be treated with the machinery housed in the table, which is outstanding mainly because it comprises a drum (3) located inside the table which consists of a polygonal structure in the faces of which are mounted a plurality of electric machines (4) used during the cutting, sanding and other operations, on the wood part, which is provided with a rotary shaft (5) which bears and rotates in respect to the frame (10) of the table.

The table for "do-it-yourself" work includes a brake (6) in one of the sides constituted by a rotary control (7) associated to a screw (8) to be introduced in one of the bushings (9) located in the end vertexes of the structure of the drum (3).

The screw (8) is inserted in the corresponding bushing (9) with which it is in opposition in the situation in which, one of the machines (4) emerges from the upper working surface (1) through an opening (11) made on the same, remaining in operative position, ready for operation.

The table for the "do-it-yourself" work may be equipped on one of its sides, with drawers and side compartments (12) located in continuation of the space in which the drum (3) rotates.

It is likewise contemplated, that the table be transportable and that it includes additional integrated elements such as an aspirator to clean the shavings detached during the cutting or trimming operations, the mouth (13) of which emerges from one of the sides of the table.

It is not considered necessary to make this description more extensive in order that any expert in the Art can understand the scope of the invention and the advantages derived from the same.

The materials, shape, size and arrangement of the elements shall be capable of variation, provided that it does not alter the essentiality of the invention.

The terms in which this Specification has been described shall always be taken in their wide and non limitative sense.

## Claims

1. Carpentry table, of the type which presents a horizontal work surface (1) and an adjustable stop (2) at a distance which facilitates the operations to be conducted on the wood part to be treated with the machinery included in the table, essentially characterized in that it comprises a drum (3) located inside the table, which consists of a polygonal structure on the faces of which are mounted a plurality of electric machines (4) which are used in cutting, sanding and other operations effected on the wood part, which is provided with a rotary shaft (5) bearing and rotating with respect to the frame (10) of the table, and which is provided with an opening (11) arranged on the working surface (1) and through which can emerge one of the machines (4), having provided that the table is equipped with braking means which establish the top position emerging from each one of the machines.

2. Carpentry table according to the previous claim, characterized in that the braking means of the drum (3) are to be found located in one of the sides of the table and consist of a rotary control (7) associated to a screw (8) to be inserted into one of the bushings (9) located in the end vertexes of the structure of the drum (3) corresponding to each one of the attachment positions of the machine which houses the drum (3).

## Amended claims

### Amended claims under Art. 19.1 PCT

1. Carpentry table, of the type which present a diversity of alternative horizontal working surfaces, provided with an adjustable stop at a distance which facilitates the operations to be conducted on the wood part to be treated with the machinery included in the table, consisting of a drum, located inside the table, of a polygonal structure, on the sides of which a series of electric machines are assembled, which are employed in the cutting, sanding and other operations effected on the wood part, which is provided with a rotary shaft, equipped with an opening arranged on the working surface through which one of the machines emerges, essentially characterized in that it is portable, without requiring fixed installations, and with the drum (3) which rotates freely as regards the frame (10) of the table and the compartments, which, either remain sealed or may be connected to a standard aspirator through an opening in one of the side walls of the table, said compartments being adapted for receiving standard machines (4) which are easily assembled and disassembled, as well as because the table is provided with braking means for the drum which stabilize the upper emerging position of each one of the machines.
2. Carpentry table according to the previous claim, characterized in that the braking means of the drum (3) are to be found located on one of the sides of the table and consist of a rotary control (7) associated to a screw (8) to be inserted into one of the bushings (9) located in the end vertexes of the structure of the drum (3) corresponding to each one of the attachment positions of the machine which houses the drum (3)
